# EUROPÄISCHE PATENTSCHRIFT

(11) **EP 3 826 888 B1**
(45) Veröffentlichungstag und Bekanntmachung des Hinweises auf die Patenterteilung: **18.01.2023**
(21) Anmeldenummer: 19749279.6
(22) Anmeldetag: 25.07.2019
(51) Int. Cl.: B60R 22/28, B60R 22/34

(54) **KRAFTBEGRENZUNGSEINRICHTUNG AUFWEISENDER GURTAUFROLLER MIT ENTKOPPLUNGSEINRICHTUNG**
FORCE LIMITING DEVICE FOR SEATBELT REEL WITH UNCOUPLING FEATURE
LIMITEUR DE FORCE POUR SYSTÈMES DE CEINTURE DE SÉCURITÉ AVEC DISPOSITIF DE DÉCOUPLEMENT

(30) Priorität: 26.07.2018 DE 102018118102; 26.03.2019 DE 102019107663
(43) Veröffentlichungstag der Anmeldung: 02.06.2021
(60) Teilanmeldung: 21195493.8
(73) Patentinhaber: Autoliv Development AB, 447 83 Vårgårda (SE)
(72) Erfinder: AXBLOM, Per, 44157 Alingsas (SE); BUD, Adrian, 51631 Dalsjöfors (SE); RYDSMO, Erik, 46695 Sollebrunn (SE)
(74) Vertreter: Feucker, Max Martin
(86) Internationale Anmeldenummer: PCT/EP2019/070024
(87) Internationale Veröffentlichungsnummer: WO 2020/021003

(56) Entgegenhaltungen:
- WO-A1-00/76814
- WO-A1-2009/045132
- DE-A1-102008 041 510
- DE-C1- 19 780 583
- US-A- 5 967 442

## Beschreibung

Die vorliegende Erfindung betrifft einen Gurtaufroller für einen Sicherheitsgurt eines Kraftfahrzeuges, mit einer drehbar in einem Gehäuserahmen gelagerten Gurtwelle, einem gegenüber dem Gehäuserahmen verriegelbaren Profilkopf und einer mehrstufigen ersten Kraftbegrenzungseinrichtung , wobei die erste Kraftbegrenzungseinrichtung einerseits mit dem Profilkopf und andererseits mit der Gurtwelle gekoppelt ist und wobei die mehrstufige erste Kraftbegrenzungseinrichtung eine kraftbegrenzte Relativdrehung der Gurtwelle gegenüber dem verriegelten Profilkopf ermöglicht, wobei eine aktiv auslösbare Entkopplungseinrichtung ausgebildet ist, mit der die Gurtwelle von der Kraftbegrenzung der mehrstufigen ersten Kraftbegrenzungseinrichtung entkoppelbar ist.

Ein Gurtaufroller ist beispielsweise aus DE 197 80 583 C1 bekannt. Mittels einer Schalteinrichtung kann der kraftbegrenzte Gurtbandauszug zwischen zwei Stufen umgeschaltet werden. Es hat sich nun herausgestellt, dass nach Erreichen des Endes der zweiten Stufe des kraftbegrenzten Gurtbandauszugs Kräfte in den Gurtaufroller eingeleitet werden, die unter Umständen einen unkontrollierten weiteren Gurtbandauszug zur Folge haben. Ein Gurtaufrolle mit den Merkmalen des Oberbegriffs des Anspruchs 1 ist aus DE 10 2008 041510 A1 bekannt Aufgabe der vorliegenden Erfindung ist es daher, die mit Bezug zum Stand der Technik geschilderten Nachteile zu beseitigen und insbesondere einen Gurtaufroller anzugeben, der auch nach Erreichen des Endes der zweiten Stufe des kraftbegrenzten Gurtbandauszuges einen kontrollierten weiteren Gurtbandauszug ermöglicht.

Gelöst wird die Aufgabe durch einen Gurtaufroller mit den Merkmalen des unabhängigen Anspruchs. Vorteilhafte Weiterbildungen des Gurtaufrollers sind in den abhängigen Ansprüchen und in der Beschreibung angegeben, wobei einzelne Merkmale der vorteilhaften Weiterbildungen in technisch sinnvollerweise miteinander kombinierbar sind.

Die Aufgabe wird gelöst durch einen Gurtaufroller mit den eingangs genannten Merkmalen, bei dem die Entkopplungseinrichtung wenigstens ein Kopplungselement und einen Wellenring umfasst, wobei das Kopplungselement in einem Ausgangszustand von dem Wellenring in einer Kopplungsstellung gehalten wird und wobei die Entkopplungseinrichtung einen aktiv auslösbaren Entkopplungsantrieb umfasst und der Wellenring nach Auslösen des Entkopplungsantriebs von dem Entkopplungsantrieb so bewegt wird, dass das wenigstens eine Kopplungselement freigegeben wird.

In einer einfachen Ausführungsform kann die Gurtwelle nach der Entkopplung frei drehbar zu dem verriegelten Profilkopf gelagert sein. Bevorzugt ist jedoch, dass nach der Entkopplung ein weiterer kraftbegrenzter Gurtauszug erfolgt, bei der Energie von einem Kraftbegrenzungselement einer zweiten Kraftbegrenzungseinrichtung aufgenommen wird, ohne dass eine wesentliche Energieaufnahme durch Kraftbegrenzungselemente der entkoppelten ersten Kraftbegrenzungseinrichtung erfolgt.

Die Erfindung sieht in ihrem Grundgedanken also vor, dass eine mechanische Einrichtung ausgebildet ist, mit der beispielsweise eine übergeordnete Steuerung im Bedarfsfall die Gurtwelle von der ersten Kraftbegrenzungseinrichtung und damit insbesondere von dem Profilkopf entkoppeln kann. Auf diese Weise kann verhindert werden, dass nach Erreichen eines Endes des durch die erste Kraftbegrenzungseinrichtung kraftbegrenzten Gurtbandauszugs Elemente des Gurtaufrollers beschädigt werden, wodurch eine unkontrollierte weitere Gurtabwickelbewegung ausgelöst würde. Die Entkopplungseinrichtung umfasst hierfür insbesondere mindestens ein mechanisch bewegbares Element, welches zumindest indirekt durch ein elektronisch oder elektrisch auslösbares Antriebselement, beispielsweise in der Form eines pyrotechnischen Gasgenerators oder eines Elektromagneten innerhalb weniger Millisekunden betätigbar ist, so dass die Gurtwelle innerhalb eines kurzen Zeitraumes sich frei oder kraftbegrenzt durch eine zweite Kraftbegrenzungseinrichtung zu dem verriegelten Profilkopf drehen kann.

Die erste Kraftbegrenzungseinrichtung umfasst eine aktiv, beispielsweise mittels eines Elektromagneten oder eines pyrotechnischen Gasgenerators auslösbare Schalteinrichtung, mit der die kraftbegrenzte Relativdrehung der Gurtwelle von einer ersten Stufe zu einer zweiten Stufe umschaltbar ist. Die Schalteinrichtung umfasst bevorzugt mindestens ein mechanisch bewegliches Bauteil, welches durch das Antriebselement antreibbar ist. Somit können zunächst zwei unterschiedliche Niveaus eines kraftbegrenzten Gurtauszuges ermöglicht werden, bevor mittels der Entkopplungseinrichtung die Gurtwelle von der ersten Kraftbegrenzungseinrichtung entkoppelt wird.

Die Schalteinrichtung der ersten Kraftbegrenzungseinrichtung umfasst hierzu bevorzugt wenigstens eine Klinke und einen Wellenring, wobei die Klinke in einem Ausgangszustand von dem Wellenring in einer die Gurtwelle mit einem ersten Kraftbegrenzungselement koppelnden Stellung gehalten wird. Die bevorzugt mit einer Selbstöffnungstendenz beispielsweise schwenkbar oder linear beweglich gelagerte Klinke sorgt in dem Ausgangszustand beispielsweise dafür, dass die Gurtwelle mit mindestens einem insbesondere innerhalb der Gurtwelle angeordneten ersten Übertragungsrohr drehfest verbunden ist. Hierbei ist insbesondere bevorzugt, dass innerhalb des Übertragungsrohres ein erstes Kraftbegrenzungselement der ersten Kraftbegrenzungseinrichtung auf einer ersten Seite mit dem Übertragungsrohr gekoppelt ist und auf einer zweiten Seite drehfest mit dem Profilkopf gekoppelt ist. Wird der Profilkopf in diesem Ausgangszustand mit einer an sich bekannten gurtbandsensitiven oder kraftfahrzeugsensitiven Verriegelungseinrichtung mit dem Gehäuserahmen verriegelt, so absorbiert das bevorzugt als Torsionsstab ausgebildete erste Kraftbegrenzungselement die durch den Gurtbandauszug eingeleitete Energie bei einer resultierenden Relativdrehung der Gurtwelle zu dem verriegelten Profilkopf.

Die Schalteinrichtung umfasst bevorzugt einen aktiv auslösbaren Schaltantrieb, wobei der Wellenring nach Auslösen des Schaltantriebes von dem Schaltantrieb so bewegt wird, dass die wenigstens eine Klinke freigegeben wird, so dass die Gurtwelle mit einem zweiten Kraftbegrenzungselement der ersten Kraftbegrenzungseinrichtung gekoppelt wird. Beispielsweise wird durch Betätigen des Schaltantriebes die zuvor bestehende drehfeste Verbindung der Gurtwelle mit dem ersten Übertragungsrohr aufgelöst, so dass die Gurtwelle relativ zu dem ersten Übertragungsrohr drehbar ist.

Insbesondere umfasst der Schaltantrieb hierfür einen Stellring und ein beispielsweise als pyrotechnischer Gasgenerator ausgebildetes Antriebselement, wobei der von dem Antriebselement angetriebene Stellring den Wellenring nach Auslösen des Schaltantriebes axial verschiebt. Hierzu kann beispielsweise vorgesehen sein, dass der Stellring in einem Gehäuse von dem Antriebselement zunächst zu einer Rotationsbewegung angetrieben wird, wobei aufgrund von in dem Gehäuse ausgebildeten Anlaufschrägen der Stellring zusätzlich zu der Rotationsbewegung eine lineare Verschiebungsbewegung in axialer Richtung (in Bezug zu der Gurtwelle) ausführt.

Nach dem Auslösen der Schalteinrichtung der ersten Kraftbegrenzungseinrichtung ist die Gurtwelle bevorzugt über ein Kopplungselement der Entkopplungseinrichtung mit einem zweiten Kraftbegrenzungselement der ersten Kraftbegrenzungseinrichtung, bevorzugt in der Form eines zweiten Torsionsstabes, gekoppelt, so dass bei einer folgenden Gurtauszugsbewegung eine Kraftbegrenzung durch Verformung des zweiten Kraftbegrenzungselements stattfindet. Beispielsweise kann der zweite Torsionsstab ebenfalls zumindest teilweise innerhalb des mindestens einen Übertragungsrohres angeordnet sein und mit seiner einen Seite drehfest mit dem ersten Torsionsstab verbunden sein, während das andere Ende des zweiten Torsionsstabes mittels Elementen der Entkopplungseinrichtung mit der Gurtwelle gekoppelt ist.

Die Entkopplungseinrichtung umfasst wenigstens ein Kopplungselement und einen Wellenring, wobei das wenigstens eine Kopplungselement in einem Ausgangszustand von dem Wellenring in einer Kopplungsstellung gehalten wird. Das insbesondere mit einer Öffnungstendenz schwenkbar oder radial beweglich gelagerte Kopplungselement wird also zunächst von dem Wellenring in seiner koppelnden Stellung gehalten, in welcher die Gurtwelle mit einem Kraftbegrenzungselement der ersten Kraftbegrenzungseinrichtung für einen kraftbegrenzten Gurtbandauszug gekoppelt ist.

Die Entkopplungseinrichtung umfasst einen aktiv auslösbaren Entkopplungsantrieb, wobei der Wellenring nach Auslösen des Entkopplungsantriebes von dem Entkopplungsantrieb so bewegt wird, dass das wenigstens eine Kopplungselement freigegeben wird. Hierzu kann insbesondere vorgesehen sein, dass der Entkopplungsantrieb einen Stellring und ein Antriebselement umfasst, wobei der von dem Antriebselement angetriebene Stellring den Wellenring nach Auslösen des Entkopplungsantriebes axial verschiebt. Das beispielsweise als Elektromagnet oder pyrotechnischer Gasgenerator ausgebildete Antriebselement kann den Stellring zu einer Rotationsbewegung in einem Gehäuse antreiben, wobei aufgrund von Ausbildung von Anlaufschrägen in dem Gehäuse der Stellring zusätzlich zu seiner Rotationsbewegung eine axiale lineare Bewegung in Richtung des Wellenrings ausführt, wodurch der Wellenring aus seiner die Kopplungselemente haltenden Stellung verschoben wird. Nachdem die Kopplungselemente durch Verschieben des Wellenrings freigegeben sind, können diese aus ihrer die Gurtwelle mit der ersten Kraftbegrenzungseinrichtung koppelnden Stellung gebracht werden. Hierzu ist das wenigstens eine Kopplungselement bevorzugt keilförmig ausgebildet und radial nach außen vorgespannt gelagert, wobei das Kopplungselement in dem Ausgangszustand formschlüssig in ein Kraftbegrenzungselement der ersten Kraftbegrenzungseinrichtung, insbesondere in das Ende des zweiten Torsionsstabes der ersten Kraftbegrenzungseinrichtung eingreift. Bevorzugt ist das wenigstens eine Kopplungselement in entsprechenden Ausnehmungen der Gurtwelle angeordnet, wobei die formschlüssige Verbindung mit dem Kraftbegrenzungselement auf einer radial innen angeordneten Seite des Kopplungselementes erfolgt.

In einer bevorzugten Ausführungsform ist die Entkopplungseinrichtung zumindest teilweise, insbesondere mit dem Kopplungselement, dem Wellenring und dem Stellring zwischen der Gurtwelle (und/oder auf einem die Gurtwelle aufgewickelten Gurtband) und einer axial aufgesetzten Gehäusekappe angeordnet. In diesem Zusammenhang ist ferner bevorzugt, dass die Schalteinrichtung der ersten Kraftbegrenzungseinrichtung zwischen der Gurtwelle (und/oder dem auf die Gurtwelle aufgewickelten Gurtband) und der Entkopplungseinrichtung zumindest teilweise, mit insbesondere der Klinke, dem Wellenring und dem Schaltring angeordnet ist.

Die Entkopplungseinrichtung ist insbesondere in Reihe zu einer Schalteinrichtung der mehrstufig ausgebildeten ersten Kraftbegrenzungseinrichtung geschaltet, so dass die Gurtwelle unabhängig von dem Schaltzustand der Schalteinrichtung von der ersten Kraftbegrenzungseinrichtung entkoppelt werden kann.

In einer Ausführungsform ist zudem vorgesehen, dass ein insbesondere als pyrotechnischer Gasgenerator ausgebildeter Antrieb der Entkopplungseinrichtung und ein ebenfalls bevorzugt als pyrotechnischer Gasgenerator ausgebildeter Antrieb einer Schalteinrichtung einer mehrstufig ausgebildeten ersten Kraftbegrenzungseinrichtung in einem gemeinsamen Gehäuse angeordnet sind, so dass der Gurtaufroller kompakt ausgebildet ist.

In diesem Zusammenhang ist insbesondere bevorzugt, wenn die Antriebe radial versetzt zueinander angeordnet sind und insbesondere die Aufnahmeöffnungen für die Antriebe in dem gemeinsamen Gehäuse in axialer Richtung einander überlappen. Die Aufnahmeöffnungen für die Antriebe können also in radialer Richtung exakt übereinander angeordnet sein, es ist aber auch möglich, dass die Aufnahmeöffnungen in axialer Richtung so weit zueinander versetzt sind, dass diese in Projektion in radialer Richtung noch überlappen, wodurch ein noch kompakterer Aufbau möglich ist.

Das gemeinsame Gehäuse ist bevorzugt an einem dem Profilkopf abgewandten Ende der Gurtwelle angeordnet.

Damit nach dem Entkoppeln der ersten Kraftbegrenzungseinrichtung von der Gurtwelle noch ein weiterer kraftbegrenzter Gurtbandauszug insbesondere auf einem niedrigeren Kraftniveau möglich ist, kann eine zweite Kraftbegrenzungseinrichtung vorgesehen sein, die ebenfalls eine kraftbegrenzte Relativdrehung der Gurtwelle gegenüber dem verriegelten Profilkopf ermöglicht. Hierzu ist die zweite Kraftbegrenzungseinrichtung bevorzugt einerseits mit dem Profilkopf und andererseits mit der Gurtwelle gekoppelt oder koppelbar.

Bei der Ausbildung der ersten Kraftbegrenzungseinrichtung als zweistufige Kraftbegrenzungseinrichtung kann die zweite Kraftbegrenzungseinrichtung somit eine dritte Stufe einer kraftbegrenzten Gurtbandauszugsbewegung bereitstellen.

Es kann dabei vorgesehen sein, dass ein Kraftbegrenzungselement der zweiten Kraftbegrenzungseinrichtung bereits während des kraftbegrenzten Gurtbandauszuges mittels der ersten Kraftbegrenzungseinrichtung Energie aufnimmt und nach dem Entkoppeln der ersten Kraftbegrenzungseinrichtung alleine Energie aufnimmt. Somit ist die zweite Kraftbegrenzungseinrichtung sowohl vor als auch nach der Entkopplung der Gurtwelle von der Kraftbegrenzung der mehrstufigen ersten Kraftbegrenzungseinrichtung mit dem Profilkopf und mit der Gurtwelle gekoppelt.

Alternativ kann vorgesehen sein, dass ein Kraftbegrenzungselement der zweiten Kraftbegrenzungseinrichtung erst nach dem Entkoppeln der ersten Kraftbegrenzungseinrichtung von der Gurtwelle Energie bei einem folgenden Gurtbandauszug aufnimmt.

Die zweite Kraftbegrenzungseinrichtung kann so ausgebildet und/oder angeordnet sein, dass das Kraftbegrenzungselement der zweiten Kraftbegrenzungseinrichtung nach dem Entkoppeln der ersten Kraftbegrenzungseinrichtung ohne weitere Maßnahmen wirksam bleibt oder wirksam wird. Es kann aber auch vorgesehen sein, dass ein Kraftbegrenzungselement der zweiten Kraftbegrenzungseinrichtung aktiv zur Kopplung mit der Gurtwelle mittels eine entsprechenden Antriebes betätigbar ist.

Das Kraftbegrenzungselement der zweiten Kraftbegrenzungseinrichtung kann beispielsweise als ein sich während der Kraftbegrenzung verformendes Band ausgebildet sein. Hierzu ist das Band beispielsweise mit seinem einen Ende mit dem Profilkopf verbunden und mit seinem anderen Ende mit der Gurtwelle, so dass bei einer Relativdrehung der Gurtwelle zu dem Profilkopf eine Verformung des Bandes erfolgt. Hierbei kann das Band auch durch eine Schikane geführt werden, durch die die nötige Energie zur Verformung des Bandes erhöht wird. Das Band ist dabei insbesondere spiralförmig und/oder mehrlagig angeordnet.

Das Kraftbegrenzungselement der zweiten Kraftbegrenzungseinrichtung kann auch durch einen Torsionsstab gebildet sein, der über ein Zahnrad zur Tordierung angetrieben wird. Hierzu ist der Torsionsstab an einem Ende drehfest mit einem ersten Zahnrad verbunden, welches mit einem zweiten Zahnrad kämmt. Das zweite Zahnrad kann beispielsweise koaxial zu dem Profilkopf angeordnet sein, während der Torsionsstab drehbar gelagert an der Gurtwelle angeordnet ist. Bei einer Relativdrehung der Gurtwelle zu dem Profilkopf wird dann der Torsionsstab durch das erste Zahnrad tordiert. Alternativ kann vorgesehen sein, dass der mit einem Zahnrad gekoppelte Torsionsstab außerhalb der Gurtwelle angeordnet ist, wobei das zweite Zahnrad mit der Gurtwelle gekoppelt ist, so dass der an sich ortsfest aber drehbar gelagerte Torsionsstab bei einer Drehung der Gurtwelle tordiert wird. In diesem Zusammenhang kann insbesondere vorgesehen sein, dass ein Schaltmechanismus vorgesehen ist, der bei Bedarf das erste Zahnrad mit dem zweiten Zahnrad in Eingriff bringt.

Als Kraftbegrenzungselement der zweiten Kraftbegrenzungseinrichtung kann aber auch eine insbesondere radiale Vorsprünge aufweisende und bevorzugt ringförmig ausgebildete Scheibenanordnung vorgesehen sein, die zur Energieaufnahme während einer Relativdrehung zwischen der Gurtwelle und dem Profilkopf angeordnet ist. Die Scheibenanordnung weist insbesondere zwei koaxial zueinander angeordnete ringförmige Scheibenelemente auf, wobei das eine bevorzugt äußere Scheibenelement drehfest insbesondere mittels einer geeigneten Formschlussgestaltung mit der Gurtwelle gekoppelt ist und das andere bevorzugt innere Scheibenelement drehfest insbesondere mittels einer geeigneten Formschlussgestaltung mit dem Profilkopf gekoppelt ist. Bei einer Relativdrehung der Gurtwelle zu dem Profilkopf werden die zwei Scheiben zueinander bewegt, wodurch insbesondere durch Reibung, elastische und/oder plastische Verformung einer oder beider Scheibenelemente eine Energieaufnahme erfolgt. Hierzu kann das innere Scheibenelement auf seinem Außenumfang eine Vorsprunggestaltung aufweisen und das äußere Scheibenelement auf seinem Innenumfang eine zu der Vorsprunggestaltung komplementäre Rücksprunggestaltung, die im Ausgangszustand ineinander greifen und bei einer Relativdrehung Reibung erzeugen und/oder verformt werden.

Ein Kraftbegrenzungselement der zweiten Kraftbegrenzungseinrichtung kann aber auch durch einen Torsionsstab gebildet sein, der unmittelbar hintereinander und/oder in Reihe mit den bevorzugt als Torsionsstäbe ausgebildeten Kraftbegrenzungselementen der mehrstufigen ersten Kraftbegrenzungseinrichtung angeordnet ist. Hierbei kann insbesondere vorgesehen sein, dass ein erstes Ende des Torsionsstabes der zweiten Kraftbegrenzungseinrichtung insbesondere unmittelbar drehfest mit einem als zweites Kraftbegrenzungselement wirkendem Torsionsstab der ersten Kraftbegrenzungseinrichtung gekoppelt ist und zum anderen insbesondere unmittelbar drehfest mit der Gurtwelle gekoppelt ist.

In diesem Zusammenhang ist auch vorgesehen, dass die erste Kraftbegrenzungseinrichtung ein zweites Übertragungsrohr aufweist, welches einerseits drehfest mit dem zweiten Kraftbegrenzungselement der ersten Kraftbegrenzungseinrichtung gekoppelt ist und andererseits mittels der Entkopplungseinrichtung zunächst mit der Gurtwelle gekoppelt ist. Das zweite Übertragungsrohr kann dabei zumindest teilweise innerhalb des ersten Übertragungsrohres angeordnet sein, welches wiederum einerseits mit dem ersten Kraftbegrenzungselement der ersten Kraftbegrenzungseinrichtung drehfest gekoppelt ist und andererseits über die Schalteinrichtung der ersten Kraftbegrenzungseinrichtung zunächst drehfest mit der Gurtwelle gekoppelt ist.

Hierbei ist insbesondere vorgesehen, dass das Kraftniveau des als erstes Kraftbegrenzungselement ausgebildeten Torsionsstabs größer ist als das Kraftniveau des als zweites Kraftbegrenzungselement ausgebildeten Torsionsstabs der ersten Kraftbegrenzungseinrichtung, während das Kraftniveau des Torsionsstabs der zweiten Kraftbegrenzungseinrichtung niedriger ist als der Kraftbegrenzungselemente der ersten Kraftbegrenzungseinrichtung.

Im Ausgangszustand ist somit die Gurtwelle über die Schalteinrichtung mit dem ersten Übertragungsrohr und über die Entkopplungseinrichtung mit dem zweiten Übertragungsrohr drehfest verbunden, während der Torsionsstab der zweiten Kraftbegrenzungseinrichtung ebenfalls drehfest mit der Gurtwelle verbunden ist. Wird nun der Profilkopf verriegelt, so erfolgt bei einer ersten Stufe der Kraftbegrenzung alleine eine Tordierung des ersten Torsionsstabes.

Durch Betätigen der Schalteinrichtung wird die drehfeste Verbindung zwischen Gurtwelle und dem ersten Übertragungsrohr aufgelöst, so dass bei einem weiteren Gurtbandauszug das zweite Übertragungsrohr gemeinsam mit der Gurtwelle gegenüber dem Profilkopf dreht, so dass in dieser Stufe der zweite Torsionsstab aufgrund seines gegenüber dem ersten Torsionsstab niedrigeren Kraftniveaus tordiert wird.

Durch Betätigen der Entkopplungseinrichtung wird sodann auch die drehfeste Verbindung der Gurtwelle mit dem zweiten Übertragungsrohr gelöst, so dass bei weiterem Gurtbandauszug eine Relativdrehung der Gurtwelle zu dem ersten und zweiten Übertragungsrohr möglich ist. Da aber der Torsionsstab der zweiten Kraftbegrenzungseinrichtung drehfest mit der Gurtwelle gekoppelt ist, erfolgt bei einem weiteren Gurtbandauszug eine Tordierung des Torsionsstabes der zweiten Kraftbegrenzungseinrichtung, da dieser ein niedrigeres Kraftbegrenzungsniveau hat als die Torsionsstäbe der ersten Kraftbegrenzungseinrichtung. Somit ist ein einfacher dreistufiger kraftbegrenzter Gurtbandauszug möglich.

Die Erfindung sowie das technische Umfeld werden im Folgenden anhand der Figuren beispielhaft erläutert. Die Figuren zeigen schematisch
- Figur 1:: einen Längsschnitt durch einen Gurtaufroller in einem Ausgangszustand,
- Figur 2:: einen Querschnitt (B-B) durch den Gurtaufroller gemäß Figur 1,
- Figur 3:: einen weiteren Querschnitt (C-C) durch den Gurtroller gemäß Figur 1,
- Figur 4:: Bestandteile des Gurtaufrollers gemäß Figur 1,
- Figur 5:: weitere Bestandteile des Gurtaufrollers gemäß Figur 1 im Ausgangszustand,
- Figuren 6-9:: den Gurtaufroller nach Betätigen einer Schalteinrichtung mit einem geänderten Kraftbegrenzungsniveau
- Figuren 10-13:: den Kraftaufroller nach Betätigen einer Entkopplungseinrichtung in einem Entkopplungszustand,
- Figur 14:: eine teilweise Explosionsansicht einer zweiten Ausführungsform eines Gurtaufrollers mit einem mittels eines Zahnrades antreibbaren Torsionsstabes einer zweiten Kraftbegrenzungseinrichtung,
- Figur 15:: eine Schnittdarstellung durch die Ausführungsform gemäß Figur 14,
- Figur 16a:: eine teilweise Explosionsansicht einer dritten Ausführungsform mit einer Scheibenanordnung als Kraftbegrenzungselement einer zweiten Kraftbegrenzungseinrichtung,
- Figur 16b:: die Scheibenanordnung aus Figur 16a in Draufsicht,
- Figur 17:: eine Schnittdarstellung durch die Ausführungsform gemäß Figur 16,
- Figur 18:: eine Draufsicht auf eine vierte Ausführungsform mit einem verformbaren Band als Kraftbegrenzungselement einer zweiten Kraftbe grenzungseinrichtung,
- Figur 19:: eine Schnittdarstellung durch die Ausführungsform gemäß Figur 18 im Bereich des Bandes im Ausgangszustand,
- Figur 20:: die Ansicht gemäß Figur 19 am Ende der Kraftbegrenzung,
- Figur 21:: eine teilweise Explosionsansicht einer fünften Ausführungsform mit einem in Reihe mit den Kraftbegrenzungselementen der ersten Kraftbegrenzungseinrichtung geschalteten Torsionsstab einer zweiten Kraftbegrenzungseinrichtung,
- Figur 22:: eine Schnittansicht durch die Ausführungsform gemäß Figur 21 und
- Figur 23:: eine Darstellung eines Kraftverlaufs mit drei Kraftniveaus.
- Figur 24a:: Beispiele einer Verbindung der Kraftbegrenzungselemente
- Figur 24b:: ein weiteres Beispiel einer Verbindung der Kraftbegrenzungselemente mit reduziertem Bauraum
- Figur 24c:: ein weiteres Beispiel einer Verbindung der Kraftbegrenzungselemente mit reduziertem Bauraum

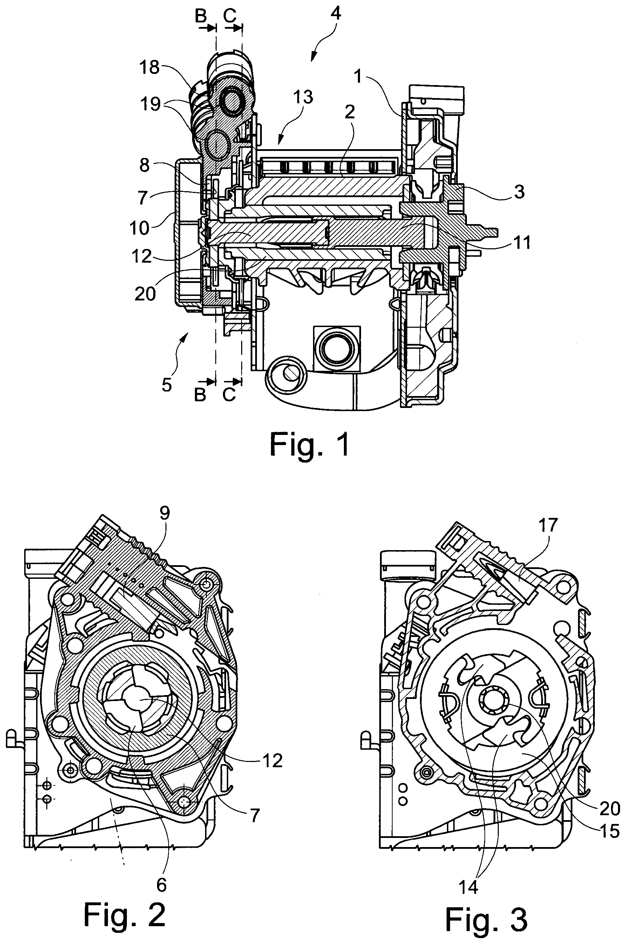

Der in den Figuren 1 bis 13 dargestellte Gurtaufroller umfasst einen Gehäuserahmen 1, in dem eine Gurtwelle 2 drehbar gelagert ist.

Der Gurtaufroller umfasst eine zweistufige erste Kraftbegrenzungseinrichtung 4, über die die Gurtwelle 2 mit einem Profilkopf 3 in einer ersten Kraftbegrenzungsstufe und in einer zweiten Kraftbegrenzungsstufe gekoppelt ist.

Die erste Kraftbegrenzungseinrichtung 4 umfasst hierzu eine Schalteinrichtung 13, die zwei Klinken 14, einen Wellenring 15, einen Stellring 16 und einen Antriebselement 17 in Form eines Gasgenerators aufweist. In dem in den Figuren 1 bis 5 gezeigten Ausgangszustand werden die mit einer Selbstöffnungstendenz schwenkbar gelagerten Klinken 14 von dem Wellenring 15 in einer koppelnden Stellung gehalten, in der die Gurtwelle 2 mit einem Übertragungsrohr 20 drehfest gekoppelt ist.

Im Inneren des Übertragungsrohres 20 sind ein erstes Kraftbegrenzungselement 11 in Form eines Torsionsstabes und ein zweites Kraftbegrenzungselement 12 in Form eines weiteren Torsionsstabes angeordnet. Das erstes Kraftbegrenzungselement 11 ist einerseits drehfest mit dem Profilkopf 3 gekoppelt und andererseits im Inneren des Übertragungsrohres 20 mit diesem drehfest verbunden. Das zweite Kraftbegrenzungselement 12 ist einerseits drehfest mit dem ersten Kraftbegrenzungselement 11 verbunden und andererseits in dem in den Figuren 1 bis 5 dargestellten Ausgangszustand über ein Kopplungselement 6 einer Entkopplungseinrichtung 5 drehfest mit der Gurtwelle 2 verbunden.

Die Entkopplungseinrichtung 5 umfasst ferner einen Wellenring 7, der in dem Ausgangszustand die radial nach außen vorgespannten Kopplungselemente 6 in der koppelnden Stellung hält. Die Entkopplungseinrichtung 5 umfasst zudem einen Stellring 8, der mittels eines Antriebselements 9 in Form eines Gasgenerators antreibbar ist.

Das Antriebselement 9 der Entkopplungseinrichtung 5 und das Antriebselement 17 der Schalteinrichtung 13 sind in einem gemeinsamen Gehäuse 18 angeordnet, wobei das Gehäuse 18 jeweils eine Aufnahmeöffnung 19 für die Antriebselemente 9, 17 aufweist. Die Aufnahmeöffnungen 19 sind in radialer Richtung zu der Gurtwelle 2 zueinander versetzt, überlappen sich aber in axialer Richtung, wie insbesondere aus Figur 1 zu erkennen ist.

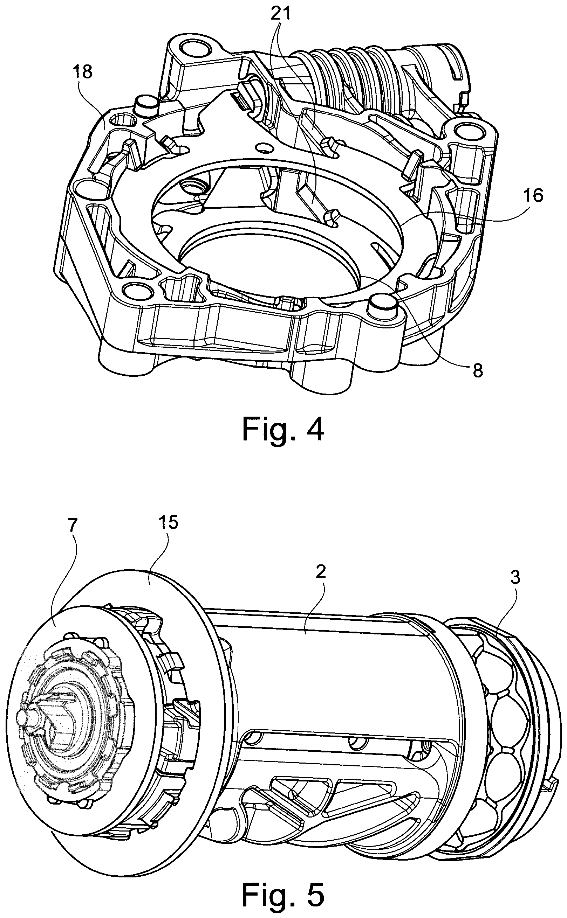

Aus Figur 4 ist zu erkennen, dass der von dem Antriebselement 9 zu einer Rotationsbewegung antreibbare Stellring 8 und der von dem Antriebselement 17 zu einer Rotationsbewegung antreibbare Stellring 16 jeweils an einer Anlaufschräge 21 anliegen, so dass die von den Antriebselementen 9, 17 verursachte Rotationsbewegung der Stellringe 8, 16 in eine Verschiebebewegung in axialer Richtung der Gurtwelle 2 resultiert.

Die Entkopplungseinrichtung 5 ist zumindest teilweise zwischen der Schalteinrichtung 13 und einer Gehäusekappe 10 angeordnet.

In dem in den Figuren 1 bis 5 dargestellten Ausgangszustand ist die Gurtwelle 2 über die Klinken 14, das Übertragungsrohr 20 und das erste Kraftbegrenzungselement 11 drehfest mit dem Profilkopf 3 verbunden, so dass die Gurtwelle 2 und der Profilkopf 3 gemeinsam eine Drehbewegung ausführen können. Wird nun der Profilkopf 3 mittels einer nicht dargestellten, aber an sich bekannten Verriegelungseinrichtung mit dem Gehäuserahmen 1 verriegelt, so ist eine kraftbegrenzte Gurtauszugsdrehung der Gurtwelle 2 möglich, bei der das erste Kraftbegrenzungselement 11 aufgrund der über das Übertragungsrohr 20 und die Klinken 14 vorhandenen Kopplung mit der Gurtwelle 2 tordiert wird und so Energie aufnimmt (erstes Kraftbegrenzungsniveau).

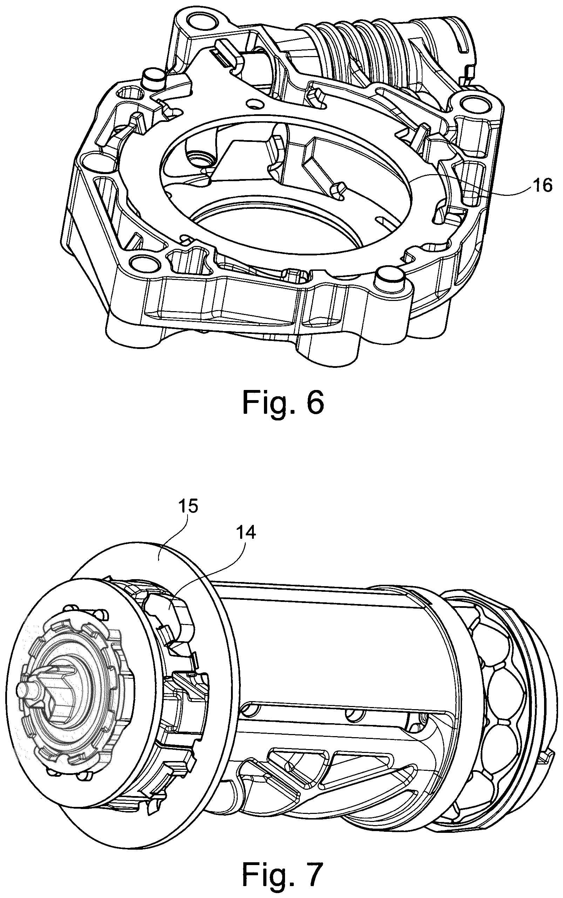

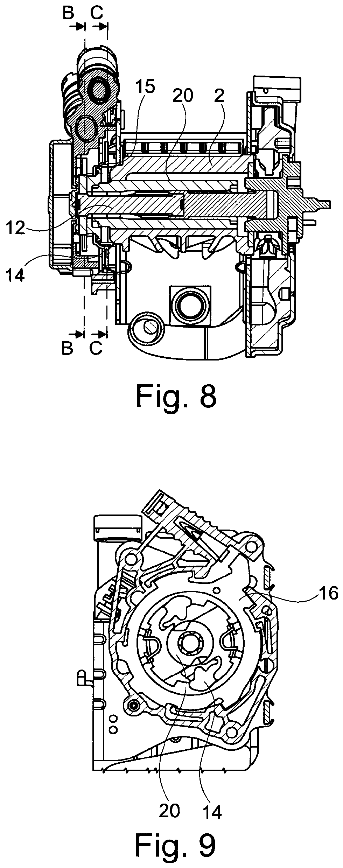

Soll nach Erreichen einer vorgebbaren Zeit oder eines vorgebbaren kraftbegrenzten Gurtbandauszugsweges eine zweite Stufe der kraftbegrenzten Gurtbandauszugsbewegung eingeleitet werden, so wird das Antriebselement 17 in Form eines pyrotechnischen Gasgenerators gezündet, wodurch ein Kolben den Stellring 16 zu einer Rotationsbewegung antreibt. Aufgrund der Anlaufschrägen 21 am Gehäuse 18 wird der Stellring 16 axial verschoben, wie dies in Figur 6 dargestellt ist. Die axiale Verschiebung des Stellrings 16 führt dazu, dass auch der Wellenring 15 axial verschoben wird (siehe Figuren 7 und 8), wodurch die Klinken 14 freigegeben werden. Die Klinken 14 lösen somit die drehfeste Kopplung zwischen der Gurtwelle 2 und dem Übertragungsrohr 20, sodass die Gurtwelle 2 relativ zu dem Übertragungsrohr 20 drehbar ist. In dieser zweiten Stufe der kraftbegrenzten Gurtbandauszugsbewegung besteht aber weiterhin eine drehfeste Verbindung zwischen der Gurtwelle 2 und dem zweiten Kraftübertragungselement 12 mittels der Kopplungselemente 6. Da das zweite Kraftbegrenzungselement 12 ein geringeres Kraftbegrenzungsniveau hat als das erste Kraftbegrenzungselement 11, erfolgt eine Torsion des zweiten Kraftbegrenzungselements 12.

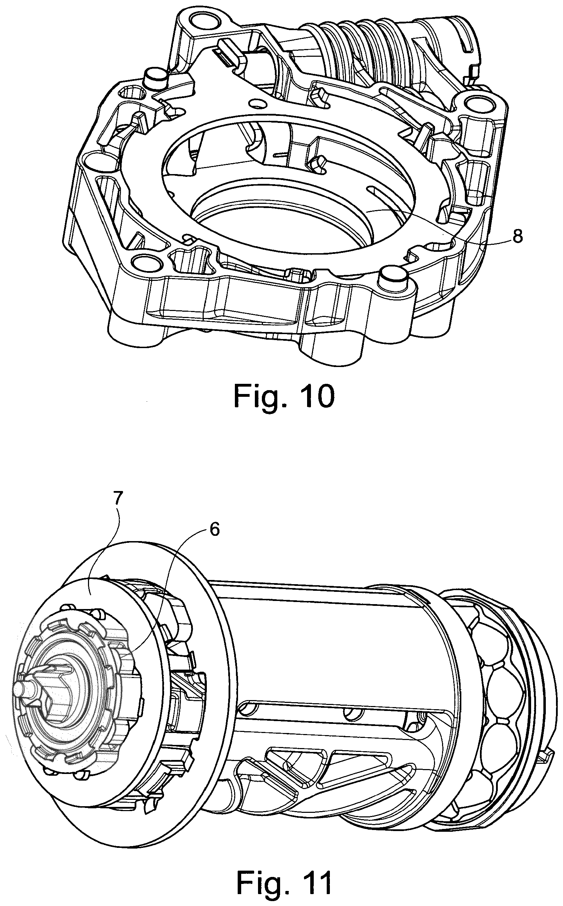

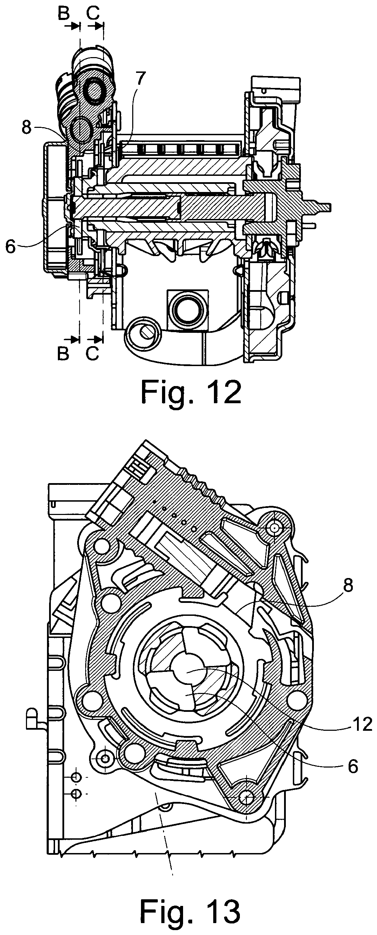

Ist nun ein maximaler kraftbegrenzter Gurtbandauszug erreicht, so kann die Gurtwelle 2 von dem Profilkopf 3 entkoppelt werden. Hierzu wird das Antriebselement 9 der Entkopplungseinrichtung 5 gezündet, wodurch der Stellring 8 zu einer Rotationsbewegung angetrieben wird, welche aufgrund der Anlaufschrägen 21 zu einer Verschiebung des Stellrings 8 in axialer Richtung führt (siehe Figur 10 und 12). Durch die axiale Verschiebung des Stellrings 8 wird auch der Wellenring 7 der Entkopplungseinrichtung 5 linear in axialer Richtung verschoben (siehe Figur 11), wodurch die keilförmigen Kopplungselemente 6 freigegeben werden und radial nach außen ausfahren. Wie insbesondere aus der Figur 13 zu erkennen ist, wird in diesem Zustand die Kopplung der Gurtwelle 2 mit dem zweiten Kraftbegrenzungselement 12 aufgehoben, so dass die Gurtwelle 2 nicht mehr mit dem verriegelten Profilkopf 3 verbunden ist und sich frei drehen kann.

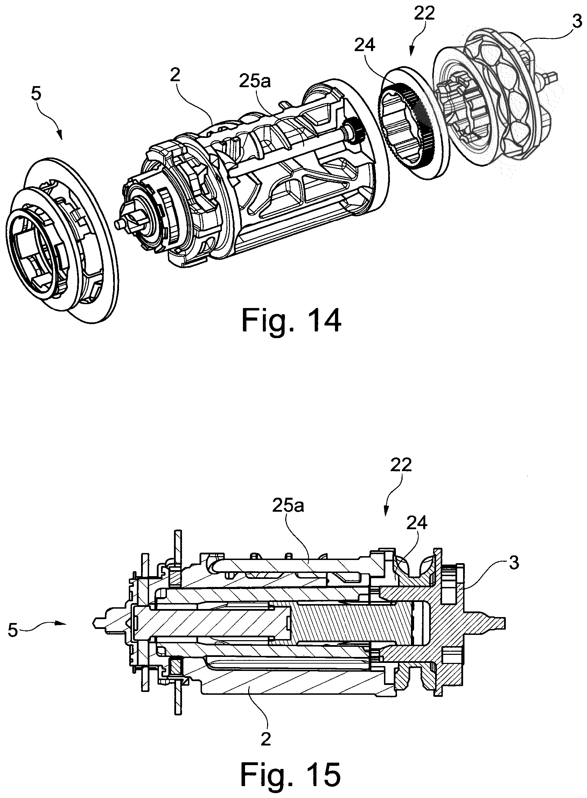

Der in Figur 14 und 15 dargestellte Gurtaufroller unterscheidet sich von dem zuvor beschriebenen Gurtaufroller darin, dass ein Zahnrad 24 drehfest mit dem Profilkopf 3 gekoppelt ist und dass ein Torsionsstab 25a vorgesehen ist, der an seinem Ende ebenfalls ein Zahnrad trägt, welches im montierten Zustand mit dem Zahnrad 24 kämmt. Bei einer Relativdrehung der Gurtwelle 2 zu dem Profilkopf 3 wird somit der Torsionsstab 25a tordiert. Somit ist aber auch der Torsionsstab 25a nach dem Betätigen der Entkopplungseinrichtung 5 noch mit dem Profilkopf 3 gekoppelt, so dass auch nach dem Betätigen der Entkopplungseinrichtung 5 ein kraftbegrenzter Gurtbandauszug möglich ist. Es ist somit eine zweite Kraftbegrenzungseinrichtung 22 zusätzlich zu der bereits oben erläuterten mehrstufigen ersten Kraftbegrenzungseinrichtung 4 ausgebildet.

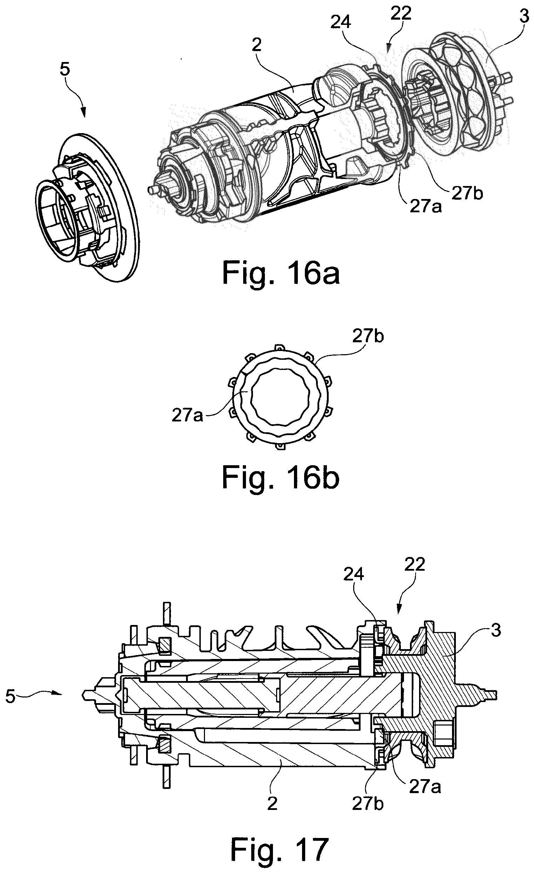

Bei dem in den Figuren 16 und 17 dargestellten Ausführungsbeispiel ist eine zweite Kraftbegrenzungseinrichtung 22 durch eine Scheibenanordnung 24 mit radialen Ausnehmungen gebildet. Die Scheibenanordnung 24 weist ein äußeres Scheibenelement 27b und ein inneres Scheibenelement 27a auf. Das äußere Scheibenelement 27 b ist drehfest mittels einer geeigneten Formschlussgestaltung mit der Gurtwelle 2 gekoppelt ist. Das innere Scheibenelement 27a ist drehfest mittels einer geeigneten Formschlussgestaltung mit einem Fortsatz des Profilkopfs 3 gekoppelt. Das innere Scheibenelement 27a weist auf seinem Außenumfang eine Vorsprunggestaltung auf und das äußere Scheibenelement 27b weist auf seinem Innenumfang eine zu der Vorsprunggestaltung komplementäre Rücksprunggestaltung auf. Die Vorsprunggestaltung und die Rücksprunggestaltung greifen im Ausgangszustand ineinander. Bei einer Relativdrehung der Gurtwelle 2 zu dem Profilkopf 3 werden die Rücksprunggestaltung und/oder die Vorsprunggestaltung elastisch und/oder plastisch verformt, wodurch eine Energieaufnahme erfolgt.

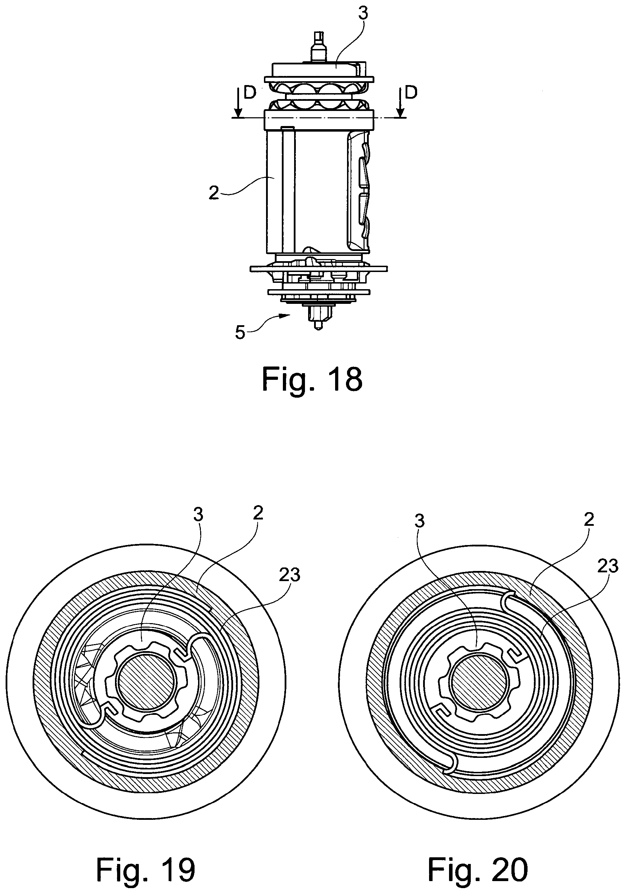

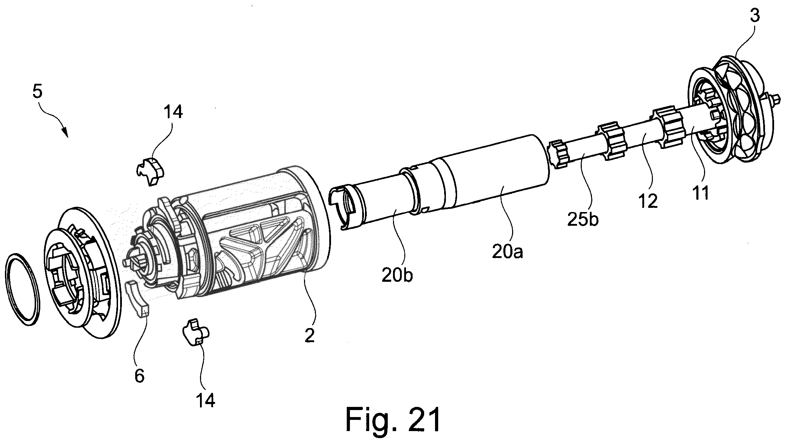

Gemäß der in den Figuren 18 bis 20 dargestellten Ausführungsform ist eine zweite Kraftbegrenzungseinrichtung 22 durch ein Band 23 gebildet. Das Band 23 ist einerseits mit der Gurtwelle 2 und andererseits mit dem Profilkopf 3 verbunden. Kommt es zu einer Relativdrehung zwischen der Gurtwelle 2 und dem Profilkopf 3, so wird das Band aus dem in Figur 19 gezeigten Zustand in den in Figur 21 gezeigten Zustand verformt, wodurch der Gurtbandauszug kraftbegrenzt wird.

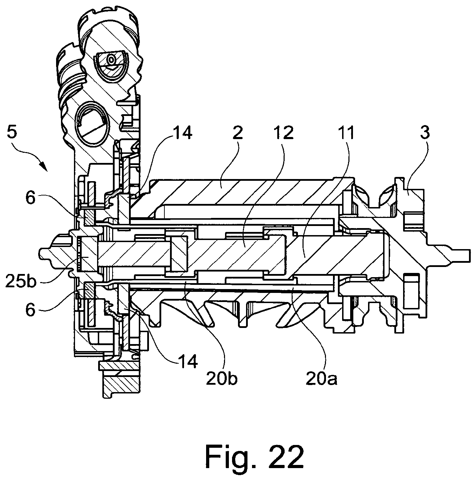

Bei dem in den Figuren 21 und 22 dargestellten Ausführungsbeispiel wird eine zweite Kraftbegrenzungseinrichtung 22 durch einen Torsionsstab 25b gebildet, welcher in Reihe mit dem ersten Kraftbegrenzungselement 11 und dem zweiten Kraftbegrenzungselement 12 der ersten Kraftbegrenzungseinrichtung 4 angeordnet ist. Bei diesem Ausführungsbeispiel ist ein erstes Übertragungsrohr 20a und ein zweites Übertragungsrohr 20b vorgesehen, die im montierten Zustand zumindest teilweise ineinander angeordnet sind. Wie insbesondere aus der Figur 22 hervorgeht, ist das erste Kraftbegrenzungselement 11 auf der rechten Seite mit dem Profilkopf 3 drehfest verbunden und an seinem linken Ende mit dem ersten Übertragungsrohr 20a drehfest verbunden. Das zweite Kraftbegrenzungselement 12 ist auf seiner rechten Seite drehfest mit dem ersten Kraftbegrenzungselement 11 und auf seinem gegenüberliegenden Ende drehfest mit dem zweiten Übertragungsrohr 20b verbunden. Der Torsionsstab 25b ist hingegen an seinem rechten Ende drehfest mit dem zweiten Kraftbegrenzungselement 12 verbunden und an seinem linken Ende drehfest mit der Gurtwelle 2.

Die Verbindung der Kraftbegrenzungselemente (25b, 11, 12) miteinander bzw. die Verbindung zu den Übertragungsrohren (20a, 20b) kann durch korrespondierende Innen - und Außenkonturen erfolgen, die beispielweise als innere und äußere Verzahnungen ausgeführt sind. Dabei werden diese ineinander gesteckt werden und es wird somit Bauraum gespart. Beispielhaft ist dieses in Fig. 22 gezeigt.

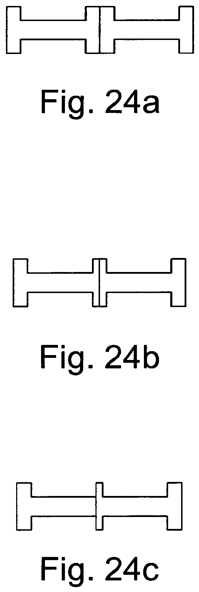

Alternativ können die Teile durch Reibschweißen, Kleben oder Löten miteinander verbunden werden. Die Fig. 24 zeigt verschiedene Möglichkeiten wie die Kraftbegrenzungselemente miteinander verbunden sein können. Fig. 24a zeigt eine Verbindung durch z.B. Reibschweißen der Kraftbegrenzungselemente (25b, 11, 12), bei der die Kraftbegrenzungselemente an Ihren Stirnseiten miteinander verbunden sind. Wie in Fig. 24b gezeigt können dabei die Endabschnitte der jeweiligen Elemente dünner ausgestaltet sein oder wie in Fig. 24c dargestellt der zu tordierende Abschnitt eines Kraftbegrenzungselements (25b, 11, 12) direkt an der Stirnseite eines Kraftbegrenzungselements (25b, 11, 12) verschweißt sein. Durch beide Ausführungsformen der Fig. 24b und 24c ergibt sich ein kleinerer Bauraum für die Anordnung der Kraftbegrenzungselemente.

In einem Ausgangszustand ist die Gurtwelle 2 über die Klinken 14 mit dem ersten Übertragungsrohr 20a drehfest verbunden und über die Kopplungselemente 6 drehfest mit dem zweiten Übertragungsrohr 20b verbunden. Kommt es nun nach einer Verriegelung des Profilkopfes 3 zu einer Relativdrehung der Gurtwelle 2, so wird zunächst nur das erste Kraftbegrenzungselement 11 aufgrund seiner über die Klinken 14 und das erste Übertragungsrohr 20a erfolgten Kopplung mit der Gurtwelle 2 tordiert (erstes Kraftbegrenzungsniveau). Sobald die Schalteinrichtung die Klinken 14 außer Eingriff mit dem ersten Übertragungsrohr 20a bringt, erfolgt im Rahmen des zweiten Kraftbegrenzungsniveaus eine Tordierung des zweiten Kraftbegrenzungselements 12, da dieses über die Kopplungselemente 6 mit der drehenden Gurtwelle 2 verbunden sind, die sich gegenüber dem ersten Übertragungsrohr 20a dreht. Da das Kraftbegrenzungsniveau des zweiten Kraftbegrenzungselements 12 geringer ist als das Kraftbegrenzungsniveau des ersten Kraftbegrenzungselements 11, tordiert nur das zweite Kraftbegrenzungselement 12.

Mit Betätigen der Entkopplungseinrichtung 5 wird auch die drehfeste Verbindung von dem zweiten Übertragungsrohr 20b mit der Gurtwelle 2 gelöst, so dass eine Relativdrehung der Gurtwelle 2 gegenüber dem zweiten Übertragungsrohr 20b möglich ist. Hierbei kommt es zu einer Tordierung des Torsionsstabes 25b, da dessen Kraftniveau kleiner als die Kraftniveaus des zweiten Kraftbegrenzungselements 12 und des ersten Kraftbegrenzungselements 11. Es erfolgt also ein Gurtbandauszug auf einem dritten Kraftniveau.

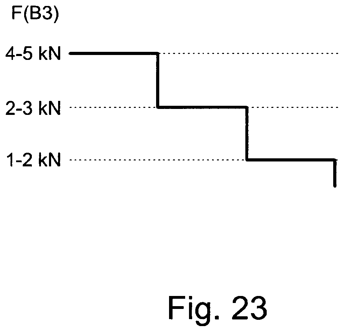

Der zeitliche Verlauf des dreistufigen Gurtbandauszugs mit drei Kraftniveaus ist in Figur 23 dargestellt. Nach Verriegeln des Profilkopfes 3 erfolgt zunächst ein Gurtbandauszug auf einem ersten Kraftniveau von beispielsweise 4 - 5 kN. Nach Betätigung der Schalteinrichtung 13 erfolgt ein Gurtbandauszug auf einem zweiten Kraftniveau von beispielsweise 2 - 3 kN. Nach Betätigung der Entkopplungseinrichtung 5 erfolgt ein Gurtbandauszug auf einem dritten Kraftniveau von beispielsweise 1 - 2 kN.

### Bezugszeichenliste

- 1: Gehäuserahmen
- 2: Gurtwelle
- 3: Profilkopf
- 4: erste Kraftbegrenzungseinrichtung
- 5: Entkopplungseinrichtung
- 6: Kopplungselement
- 7: Wellenring
- 8: Stellring
- 9: Antriebselement
- 10: Gehäusekappe
- 11: erstes Kraftbegrenzungselement
- 12: zweites Kraftbegrenzungselement
- 13: Schalteinrichtung
- 14: Klinke
- 15: Wellenring
- 16: Stellring
- 17: Antriebselement
- 18: Gehäuse
- 19: Aufnahmeöffnung
- 20, a, b: Übertragungsrohr
- 21: Anlaufschräge
- 22: zweite Kraftbegrenzungseinrichtung
- 23: Band
- 24: Zahnrad
- 25a, b: Torsionsstab
- 26: Scheibenanordnung
- 27a, b: Scheibenelement

## Patentansprüche

1. Gurtaufroller für einen Sicherheitsgurt eines Kraftfahrzeuges, mit
- einer drehbar in einem Gehäuserahmen (1) gelagerten Gurtwelle (2),
- einem gegenüber dem Gehäuserahmen (1) verriegelbaren Profilkopf (3) und
- einer mehrstufigen ersten Kraftbegrenzungseinrichtung (4), wobei die erste Kraftbegrenzungseinrichtung (4) einerseits mit dem Profilkopf (3) und andererseits mit der Gurtwelle (2) gekoppelt ist und wobei die erste Kraftbegrenzungseinrichtung (4) eine kraftbegrenzte Relativdrehung der Gurtwelle (2) gegenüber dem verriegelten Profilkopf (3) ermöglicht,
wobei
eine aktiv auslösbare Entkopplungseinrichtung (5) ausgebildet ist, mit der die Gurtwelle (2) von der Kraftbegrenzung der mehrstufigen ersten Kraftbegrenzungseinrichtung (4) entkoppelbar ist, **dadurch gekennzeichnet, dass** die Entkopplungseinrichtung (5) wenigstens ein Kopplungselement (6) und einen Wellenring (7) umfasst, wobei das Kopplungselement (6) in einem Ausgangszustand von dem Wellenring (7) in einer Kopplungsstellung gehalten wird und wobei die Entkopplungseinrichtung (5) einen aktiv auslösbaren Entkopplungsantrieb umfasst und der Wellenring (7) nach Auslösen des Entkopplungsantriebs von dem Entkopplungsantrieb so bewegt wird, dass das wenigstens eine Kopplungselement (6) freigegeben wird.

2. Gurtaufroller nach Anspruch 1, **dadurch gekennzeichnet, dass** eine zweite Kraftbegrenzungseinrichtung (22) vorgesehen ist, wobei die zweite Kraftbegrenzungseinrichtung (22) eine kraftbegrenzte Relativdrehung der Gurtwelle (2) gegenüber dem verriegelten Profilkopf (3) ermöglicht.

3. Gurtaufroller nach Anspruch 2, wobei die zweite Kraftbegrenzungseinrichtung (22) sowohl vor als auch nach der Entkopplung der Gurtwelle (2) von der Kraftbegrenzung der mehrstufigen ersten Kraftbegrenzungseinrichtung (4) mit dem Profilkopf (3) und mit der Gurtwelle (2) gekoppelt ist.

4. Gurtaufroller nach Anspruch 2 oder 3, wobei die zweite Kraftbegrenzungseinrichtung (22) zumindest ein Kraftbegrenzungselement aus der folgenden Gruppe umfasst:
- ein sich während der Kraftbegrenzung verformendes Band (23),
- einen über ein Zahnrad (24) zur Tordierung angetriebenen Torsionsstab (25a),
- eine insbesondere zwei Scheibenelemente (27a, b) aufweisende Scheibenanordnung (26),
- einen unmittelbar in Reihe mit den Kraftbegrenzungselementen (11, 12) der mehrstufigen ersten Kraftbegrenzungseinrichtung (4) angeordneten Torsionsstab (25b).

5. Gurtaufroller nach einem der vorhergehenden Ansprüche , wobei der Entkopplungsantrieb einen Stellring (8) und ein Antriebselement (9) umfasst, wobei der von dem Antriebselement (9) angetriebene Stellring (8) den Wellenring (7) nach Auslösen des Entkopplungsantriebs axial verschiebt.

6. Gurtaufroller nach einem der vorhergehenden Ansprüche, wobei das wenigstens eine Kopplungselement (6) keilförmig ausgebildet ist und radial nach außen vorgespannt gelagert ist und in der Kopplungsstellung formschlüssig in ein Kraftbegrenzungselement (12) der ersten Kraftbegrenzungseinrichtung (4) eingreift.

7. Gurtaufroller nach einem der vorhergehenden Ansprüche, wobei die Entkopplungseinrichtung (5) zumindest teilweise in axialer Richtung zwischen einem auf die Gurtwelle (2) aufgewickelten Gurtband und einer axial aufgesetzten Gehäusekappe (10) angeordnet ist.

8. Gurtaufroller nach einem der vorhergehenden Ansprüche, wobei die mehrstufig ausgebildete erste Kraftbegrenzungseinrichtung (4) eine aktiv auslösbare Schalteinrichtung (13) umfasst, mit der die kraftbegrenzte Relativdrehung der Gurtwelle (2) von einer ersten Stufe zu einer zweiten Stufe umschaltbar ist.

9. Gurtaufroller nach Anspruch 8, wobei die Schalteinrichtung (13) wenigstens eine Klinke (14) und einen Wellenring (15) umfasst, wobei die Klinke (14) in einem Ausgangszustand von dem Wellenring (15) in einer die Gurtwelle (2) mit einem ersten Kraftbegrenzungselement (11) der ersten Kraftbegrenzungseinrichtung (4) koppelnden Stellung gehalten wird.

10. Gurtaufroller nach Anspruch 9, wobei die Schalteinrichtung (13) einen aktiv auslösbaren Schaltantrieb umfasst und der Wellenring (15) nach Auslösen des Schaltantriebs von dem Schaltantrieb so bewegt wird, dass die wenigstens eine Klinke (14) freigegeben wird, so dass die Gurtwelle (2) mit einem zweiten Kraftbegrenzungselement (12) der ersten Kraftbegrenzungseinrichtung (4) gekoppelt wird.

11. Gurtaufroller nach Anspruch 10, wobei der Schaltantrieb einen Stellring (16) und ein Antriebselement (17) umfasst, wobei der von dem Antriebselement (17) angetriebene Stellring (16) den Wellenring (15) nach Auslösen des Schaltantriebs axial verschiebt.

12. Gurtaufroller nach einem der vorhergehenden Ansprüche, wobei die Entkopplungseinrichtung (5) in Reihe mit einer Schalteinrichtung (13) der mehrstufig ausgebildeten ersten Kraftbegrenzungseinrichtung (4) geschaltet ist.

13. Gurtaufroller nach einem der vorhergehenden Ansprüche, **dadurch gekennzeichnet, dass** ein insbesondere pyrotechnischer Antrieb der Entkopplungseinrichtung (5) und ein insbesondere pyrotechnischer Antrieb einer Schalteinrichtung (13) der mehrstufig ausgebildeten ersten Kraftbegrenzungseinrichtung (4) zum Umschalten der kraftbegrenzten Relativdrehung der Gurtwelle (2) von einer ersten Stufe zu einer zweiten Stufe in einem gemeinsamen Gehäuse (18) angeordnet sind.

14. Gurtaufroller nach Anspruch 13, wobei die Antriebe radial versetzt zueinander angeordnet sind.

15. Gurtaufroller nach Anspruch 14, wobei Aufnahmeöffnungen (13) für die Antriebe in dem gemeinsamen Gehäuse (18) in axialer Richtung einander überlappen.

## Claims

1. A belt retractor for a seat belt of a motor vehicle, having
- a belt shaft (2), rotatably mounted in a housing frame (1),
- a profile head (3), which can be locked relative to the housing frame (1), and
- a multistage first force-limiting device (4), wherein the first force-limiting device (4) is coupled on the one hand to the profile head (3) and on the other hand to the belt shaft (2), and wherein the first force-limiting device (4) allows a force-limited rotation of the belt shaft (2) relative to the locked profile head (3),
wherein
an actively triggerable decoupling device (5) is configured, with which the belt shaft (2) can be decoupled from the force limitation of the multistage first force-limiting device (4), **characterized in that** the decoupling device (5) comprises at least one coupling element (6) and a shaft ring (7), wherein the coupling element (6) in an initial state is held in a coupling position by the shaft ring (7), and wherein the decoupling device (5) comprises an actively triggerable decoupling drive, and the shaft ring (7), after the decoupling drive has been triggered, is moved by the decoupling drive in such a way that the at least one coupling element (6) is released.

2. The belt retractor according to claim 1, **characterized in that** a second force-limiting device (22) is provided, wherein the second force-limiting device (22) allows a force-limited rotation of the belt shaft (2) relative to the locked profile head (3).

3. The belt retractor according to claim 2, wherein the second force-limiting device (22) is coupled to the profile head (3) and to the belt shaft (2) both before and after the decoupling of the belt shaft (2) from the force limitation of the multistage first force-limiting device (4).

4. The belt retractor according to claim 2 or 3, wherein the second force-limiting device (22) comprises at least one force-limiting element of the following group:
- a band (23) which deforms during the force limitation,
- a torsion bar (25a) driven for torsion via a gearwheel (24),
- a disk arrangement (26) comprising in particular two disk elements (27a, b),
- a torsion bar (25b) arranged directly in series with the force-limiting elements (11, 12) of the multistage first force-limiting device (4).

5. The belt retractor according to any one of the preceding claims, wherein the decoupling drive comprises an adjusting ring (8) and a drive element (9), wherein the adjusting ring (8) driven by the drive element (9) displaces the shaft ring (7) axially after the decoupling drive has been triggered.

6. The belt retractor according to any one of the preceding claims, wherein the at least one coupling element (6) is wedge-shaped and is mounted so as to be pretensioned radially outward and, in the coupling position, engages in a positively locking manner in a force-limiting element (12) of the first force-limiting device (4).

7. The belt retractor according to any one of the preceding claims, wherein the decoupling device (5) is arranged at least partially in the axial direction between a belt webbing wound on the belt shaft (2) and an axially mounted housing cap (10).

8. The belt retractor according to any one of the preceding claims, wherein the multistage first force-limiting device (4) comprises an actively triggerable switching device (13) by means of which the force-limited relative rotation of the belt shaft (2) can be switched from a first stage to a second stage.

9. The belt retractor according to claim 8, wherein the switching device (13) comprises at least one pawl (14) and one shaft ring (15), wherein the pawl (14) is held in an initial state by the shaft ring (15) in a position coupling the belt shaft (2) to a first force-limiting element (11) of the first force-limiting device (4).

10. The belt retractor according to claim 9, wherein the switching device (13) comprises an actively triggerable switching drive and, after the switching drive has been triggered, the shaft ring (15) is moved by the switching drive in such a way that the at least one pawl (14) is released, so that the belt shaft (2) is coupled to a second force-limiting element (12) of the first force-limiting device (4).

11. The belt retractor according to claim 10, wherein the switching drive comprises an adjusting ring (16) and a drive element (17), wherein the adjusting ring (16) driven by the drive element (17) displaces the shaft ring (15) axially after the switching drive has been triggered.

12. The belt retractor according to any one of the preceding claims, wherein the decoupling device (5) is connected in series with a switching device (13) of the multistage first force-limiting device (4).

13. The belt retractor according to any one of the preceding claims, **characterized in that** an in particular pyrotechnic drive of the decoupling device (5) and an in particular pyrotechnic drive of a switching device (13) of the multistage first force-limiting device (4) are arranged in a common housing (18) for switching the force-limited relative rotation of the belt shaft (2) from a first stage to a second stage.

14. The belt retractor according to claim 13, wherein the drives are arranged radially offset from one another.

15. The belt retractor according to claim 14, wherein receiving openings (13) for the drives in the common housing (18) overlap in the axial direction.

## Revendications

1. Enrouleur de ceinture pour une ceinture de sécurité d'un véhicule automobile, comportant
- un arbre de ceinture (2) monté de manière à pouvoir tourner dans un cadre de boîtier (1),
- une tête profilée (3) pouvant être verrouillée par rapport au cadre de boîtier (1) et
- un premier dispositif de limitation de force (4) à plusieurs étages, le premier dispositif de limitation de force (4) étant couplé d'une part à la tête profilée (3) et d'autre part à l'arbre de ceinture (2) et le premier dispositif de limitation de force (4) permettant une rotation relative limitée en termes de force de l'arbre de ceinture (2) par rapport à la tête profilée (3) verrouillée,
dans lequel
un dispositif de désolidarisation (5) pouvant être déclenché activement est formé, avec lequel l'arbre de ceinture (2) peut être désolidarisé de la limitation de force du premier dispositif de limitation de force (4) à plusieurs étages, **caractérisé en ce que** le dispositif de désolidarisation (5) comprend au moins un élément de couplage (6) et un anneau d'arbre (7), l'élément de couplage (6) étant maintenu, dans un état initial, dans une position de couplage par l'anneau d'arbre (7), et le dispositif de désolidarisation (5) comprenant un entraînement de désolidarisation pouvant être déclenché activement et l'anneau d'arbre (7) étant déplacé par l'entraînement de désolidarisation après le déclenchement de l'entraînement de désolidarisation de telle sorte que l'au moins un élément de couplage (6) est libéré.

2. Enrouleur de ceinture selon la revendication 1, **caractérisé en ce qu'un** second dispositif de limitation de force (22) est prévu, le second dispositif de limitation de force (22) permettant une rotation relative limitée en termes de force de l'arbre de ceinture (2) par rapport à la tête profilée (3) verrouillée.

3. Enrouleur de ceinture selon la revendication 2, dans lequel le second dispositif de limitation de force (22) est couplé à la tête profilée (3) et à l'arbre de ceinture (2) à la fois avant et après la désolidarisation de l'arbre de ceinture (2) de la limitation de force du premier dispositif de limitation de force (4) à plusieurs étages.

4. Enrouleur de ceinture selon la revendication 2 ou 3, dans lequel le second dispositif de limitation de force (22) comprend au moins un élément de limitation de force choisi dans le groupe constitué par :
- une sangle (23) se déformant pendant la limitation de force,
- une barre de torsion (25a) entraînée par l'intermédiaire d'une roue dentée (24) pour la torsion,
- un agencement de disques (26) présentant en particulier deux éléments de disques (27a, b),
- une barre de torsion (25b) disposée directement en série avec les éléments de limitation de force (11, 12) du premier dispositif de limitation de force (4) à plusieurs étages.

5. Enrouleur de ceinture selon l'une des revendications précédentes, dans lequel l'entraînement de désolidarisation comprend un anneau de réglage (8) et un élément d'entraînement (9), l'anneau de réglage (8) entraîné par l'élément d'entraînement (9) déplaçant axialement l'anneau d'arbre (7) après le déclenchement de l'entraînement de désolidarisation.

6. Enrouleur de ceinture selon l'une des revendications précédentes, dans lequel l'au moins un élément de couplage (6) est en forme de coin et est monté précontraint radialement vers l'extérieur et, dans la position de couplage, vient en prise par complémentarité de forme dans un élément de limitation de force (12) du premier dispositif de limitation de force (4).

7. Enrouleur de ceinture selon l'une des revendications précédentes, dans lequel le dispositif de désolidarisation (5) est disposé au moins partiellement dans la direction axiale entre une sangle de ceinture enroulée sur l'arbre de ceinture (2) et un capuchon de boîtier (10) placé axialement.

8. Enrouleur de ceinture selon l'une des revendications précédentes, dans lequel le premier dispositif de limitation de force (4) à plusieurs étages comprend un dispositif de commutation (13) pouvant être déclenché activement, avec lequel la rotation relative limitée en termes de force de l'arbre de ceinture (2) peut être commutée d'un premier étage à un second étage.

9. Enrouleur de ceinture selon la revendication 8, dans lequel le dispositif de commutation (13) comprend au moins un cliquet (14) et un anneau d'arbre (15), le cliquet (14) étant maintenu, dans un état initial, par l'anneau d'arbre (15) dans une position couplant l'arbre de ceinture (2) à un premier élément de limitation de force (11) du premier dispositif de limitation de force (4).

10. Enrouleur de ceinture selon la revendication 9, dans lequel le dispositif de commutation (13) comprend un entraînement de commutation pouvant être déclenché activement et l'anneau d'arbre (15) est déplacé par l'entraînement de commutation après le déclenchement de l'entraînement de commutation de telle sorte que l'au moins un cliquet (14) est libéré, de sorte que l'arbre de ceinture (2) est couplé à un second élément de limitation de force (12) du premier dispositif de limitation de force (4).

11. Enrouleur de ceinture selon la revendication 10, dans lequel l'entraînement de commutation comprend un anneau de réglage (16) et un élément d'entraînement (17), l'anneau de réglage (16) entraîné par l'élément d'entraînement (17) déplaçant axialement l'anneau d'arbre (15) après le déclenchement de l'entraînement de commutation.

12. Enrouleur de ceinture selon l'une des revendications précédentes, dans lequel le dispositif de désolidarisation (5) est monté en série avec un dispositif de commutation (13) du premier dispositif de limitation de force (4) à plusieurs étages.

13. Enrouleur de ceinture selon l'une des revendications précédentes, **caractérisé en ce qu'**un entraînement, en particulier pyrotechnique, du dispositif de désolidarisation (5) et un entraînement, en particulier pyrotechnique, d'un dispositif de commutation (13) du premier dispositif de limitation de force (4) à plusieurs étages sont disposés dans un boîtier commun (18) pour la commutation de la rotation relative limitée en termes de force de l'arbre de ceinture (2) d'un premier étage à un second étage.

14. Enrouleur de ceinture selon la revendication 13, dans lequel les entraînements sont décalés radialement les uns par rapport aux autres.

15. Enrouleur de ceinture selon la revendication 14, dans lequel des ouvertures de réception (13) pour les entraînements se chevauchent dans la direction axiale dans le boîtier commun (18).
